# EUROPEAN PATENT APPLICATION

(11) **EP 2 746 181 A1**
(43) Date of publication of application: **25.06.2014**
(21) Application number: 12008458.7
(22) Date of filing: 19.12.2012
(51) Int. Cl.: B65D 5/42, G02B 3/00, B29D 11/00

(54) **Container with optical element formed by microstructure**

(71) Applicant: Philip Morris Products S.A., 2000 Neuchâtel (CH)
(72) Inventor: Hugonnet, Jean-François, 1093 La Conversion - Lutry (CH)
(74) Representative: Grünecker, Kinkeldey, Stockmair & Schwanhäusser

(57) **Abstract**

The present invention relates to a container (14) comprising a multilayer sheet, with a substrate layer (1) and a print layer comprising add-on material. The container comprises a first area (8) wherein an optical element is provided, which is formed by a microstructure (3) with a microstructure height in the substrate layer, a second area (6) wherein add-on material is provided and which is free of the microstructure, and a transition area (7) between the first area and the second area. The transition area comprises a transition microstructure that is formed in the substrate layer, wherein in the transition area the microstructure height of the transition microstructure decreases from the first area towards the second area. The invention further relates to a blank for a container being a multilayer sheet, and a method for production of a multilayer sheet with an optical element.

## Description

The present invention relates to a container with an optical element. The invention further relates to a blank for a container with an optical element, and a method for production of a multilayer sheet with an optical element.

US-A-7,298,533 discloses refractive and diffractive optical layers, such as for Fresnel lenses and holographic elements, which are formed by providing microscopic patterns in surfaces.

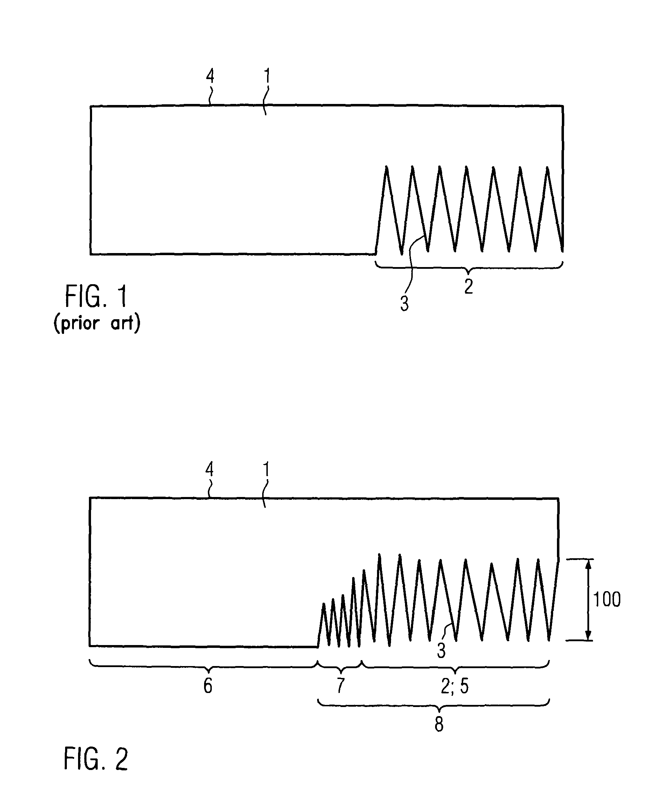

In Fig.1 a multilayer sheet with a transparent substrate layer 1 is shown, which comprises an optical element 2 formed by a microstructure 3. The substrate layer comprises a printable side opposite of the microstructure 3 of the optical element 2. However, if the print on the printable side 4 is not properly aligned with the microstructure 3, the misalignment will be visible to consumers, lowering the quality of the aesthetic appearance of the product comprising the multilayer sheet. This applies in particular if the side of the multilayer sheet comprising the microstructure is coated with a reflective material because then the reflective region bordering the microstructure 3 is shiny and the misalignment becomes very apparent to consumers, even when being small. Thus, the print and the optical element have to be aligned with high precision, which is difficult and expensive to implement, as the optical element and the print are typically created in different manufacturing lines.

It is an objective of the invention to provide a container comprising a multilayer sheet with an optical element therein, which provides an excellent visual appearance. It is a further objective of the invention to provide a container comprising a multilayer sheet with an optical element therein that is capable of compensating a misalignment between print and the optical element in the multilayer sheet.

The invention relates to a container comprising a multilayer sheet, the multilayer sheet comprising a substrate layer, and a print layer comprising add-on material. The container comprises a first area wherein an optical element is provided, the optical element being formed by a microstructure with a microstructure height in the substrate layer, a second area wherein add-on material is provided and wherein no microstructure is provided, and a transition area between the first area and the second area, the transition area comprising a transition microstructure that is formed in the substrate layer. According to the invention, the microstructure height of the transition microstructure in the transition area decreases from the first area towards the second area.

The decrease in the microstructure height of the transition microstructure in the transition area provides the benefit that the optical effect of the optical element is smoothly faded out towards the second area between the first and second area. Thus, if the second area is printed, a small misalignment between the add-on material of the print layer and the optical element will become substantially less visible due to the decrease of the reflection at the substrate layer.

The multilayer sheet is preferably printed in the area corresponding to the transition area. In particular, the print layer is provided in the second area, and at least partially extending into the transition area. For the avoidance of doubt, the first area, the transition area and the second area are differentiated by the presence or absence of a microstructure in the substrate layer. All areas of the container may comprise add-on material. That is, all areas of the container may be printed. It is preferred that the print of the print layer fades out in the transition area, such that the first area is not printed in order to improve the visibility of the optical element. Thus, the print may be gradually faded out in the transition area in some embodiments, and the print may fully cover the transition area in other embodiments. Further, the whole multilayer sheet may be printed, not only the second area.

According to the invention, a lower precision for the alignment of the print layer and the optical element is required, but at the same time, a higher quality end product is provided. The cost of the production process of the optical element is not increased, as the production process is not significantly changed, and, in particular, the same machines can be used, with only a slightly modified tool surface forming the microstructure.

The microstructure height is in particular the local difference in between the peaks and the recesses of the microstructure in the direction normal to the plane of the first area, and in particular normal to the extension of the multilayer sheet. The transition area is preferably provided along the whole border between the first and second area. The microstructure height may be gradually reduced to zero in the transition area. Preferably, the microstructure height in the transition area is maximally reduced between about 20 percent and 100 percent compared to the average microstructure height in the first area. More preferably, the microstructure height in the transition area is maximally reduced between about 50 percent and 100 percent compared to the average microstructure height in the first area. Most preferably, the microstructure height in the transition area is maximally reduced between about 70 percent and 100 percent compared to the average microstructure height in the first area. The maximum reduction of the microstructure height is usually provided in a portion of the transition area, which is in a distance to the first area. In preferred embodiments the maximum reduction of the microstructure height is provided in a portion of the transition area which borders to the second area. The decrease of microstructure height may take different forms, for example, the decrease may be stepwise, linear, exponential or combinations thereof. Preferably, the decrease of microstructure height is linear as this allows for a particularly smooth transition between the reflection of the optical element between the first area and second area.

The optical element is preferably a refractive or diffractive optical element, wherein also refractive and diffractive optical elements are possible.

Preferably, the microstructure is a micro-embossed structure in the substrate layer and the microstructure height is the embossing depth. Embossing is an effective way for precisely creating microstructures in the dimension required for optical elements. The usual embossing depth is 0.2 to 200 micrometers, preferably between about 5 micrometers and about 50 micrometers. However, there are also alternatives regarding the forming of such microstructures, such as contact copying, casting and extruding.

Preferably, the printable second area is provided on a first side of the multilayer sheet, while the microstructure is provided on the side of the substrate layer which is facing away from the print layer. Thus, the microstructure and the printed surface of the multilayer sheet are arranged on opposite sides. This provides the benefit that the print does not negatively interfere with the microstructure.

A printable layer or print layer can be provided as well on the microstructure. Furthermore, the multilayer sheet may be printed on both sides, namely, the side with the microstructure and the opposite side.

Generally, a printable layer may be provided on any side of the multilayer sheet to facilitate the application of the print layer, when printing multilayer sheet. In particular, a printable layer may be provided on the first side of the multilayer sheet in the region of the second area and in particular extending as well at least partially or fully into the transition area. The printable layer may be applied in a pre-treatment process regarding the printing, to enable a better printability. The printable layer may be a matt printing layer, such as a matt lacquer, or a primer, which facilitates the adhesion between a print layer and the multilayer sheet.

In one embodiment, a base board is provided on a second side of the multilayer sheet, wherein the second side is opposite to the first side of the multilayer sheet. The base board provides stability and protects the microstructure. The base board may in particular be fixed by means of adhesive to the substrate layer. The base board preferably has a weight of in between about 150 and 350 gram per square meter, more preferably in between 230 and 270 gram per square meter.

Preferably, the substrate layer is light transmissive. Preferably, the light transmissibility applies to visible light, in particular light with a wave length in between about 380 nanometers and about 740 nanometers. However, in some applications the light transmissibility may also include infrared light with wave lengths longer than about 740 nanometers or ultraviolet light with wave lengths shorter than about 380 nanometers, or both infrared and ultraviolet light. Furthermore, the light transmissibility may only apply for either infrared, visible light, or ultraviolet light.

Preferably, the substrate layer is translucent, particularly for light in the visual range to the human eye, that is, light with a wavelength of between about 380 nanometers to about 740 nanometers. However, the optical element may also be designed to be used for infrared or ultra-violet light, such that the translucence may also apply for those wavelengths.

Alternatively, the substrate layer may be substantially opaque. Preferably, this means that the opacity of the substrate layer is between about 80 percent and 100 percent. In this case, the microstructure and the add-on material of the print layer are provided on the same side of the multilayer sheet, namely the side facing the outside of the container. Preferably, a substantially transparent covering layer may be provided on the substrate layer to protect the microstructure and to provide a surface for applying the add-on material or a primer or both. Preferably, this means that the transparency of the covering layer is between about 80 percent and 100 percent.

In particular, the substrate layer comprises a polymer film, preferably a polyethylene terephthalate (PET) film. The polymer film preferably has a thickness of between about 12 micrometers and about 30 micrometers, more preferably, the polymer film has a thickness of between about 19 micrometers and about 23 micrometers. The substrate may comprise two layers, namely, a base layer and an imprinting layer for creating the microstructure. An example of a suitable base layer is a polyethylene terephthalate (PET) layer. An example of a suitable imprinting layer is a heat curable or ultraviolet light (UV) curable layer.

In one embodiment, the substrate layer comprises a ultra-violet curable coating, wherein the microstructure and the transition microstructure are formed within the ultra-violet curable coating. The microstructure is formed in a ultra-violet curable coating, before the same is cured by means of ultra-violet light. In particular, a surface relief pattern may be provided on a drum, which also contains a source of ultra-violet light, which applies ultra-violet light to the ultra-violet coating while same is in contact with the surface relief pattern.

The ultra-violet curable coating may be colored to provide a color effect in the reflected light. This provides the benefit that the optical element or transition area can appear in desired colors.

Alternatively to providing the microstructure in a ultra-violet curable coating the microstructures may be provided directly on the substrate layer by embossing.

The add-on material in the print layer may comprise ink, lacquer, varnish, metallisation, luminescent material and combinations thereof, and any other materials that may alter the feel, odour or appearance of the container. However, in other embodiments, the microstructure may as well be directly formed in the polymer film.

Preferably, the ultra-violet curable coating comprises a colorant. In particular, the ultra-violet curable coating may have the same colour throughout the multilayer sheet. However, in other embodiments, it is also possible that the ultra-violet curable coating comprises different concentrations of one or several different colorants in different sections of the multilayer sheet, such that in particular a gradient regarding the color is visible. Furthermore, colorants of different colors may be provided in the ultra-violet curable coating. The colorant enables that at least one printing step is not necessary anymore, as for example the background color of the multilayer sheet can be defined by the colorant.

Preferably, the optical element is reflective. More in particular, a reflective coating is applied on the substrate layer. In particular, the reflective coating is a metallization or a thin film dielectric stacked structure.

Alternatively, no reflective coating may be provided on the multilayer sheet, and same may be light transmissive. However, even in this case, a better alignment of a print layer and the transmissive optical element is beneficial.

Preferably, light which is supplied to the optical element passes the generally transparent substrate layer, is then reflected by the reflective coating applied on the microstructure, and leaves the optical element through the transparent substrate layer, such than an optical effect is provided.

Preferably, the optical element comprises an area providing a Fresnel lens. A Fresnel lens enables the provision of the effect of a conventional spherical lens with a reduced amount of material required. For a Fresnel lens, a conventional lens is divided into a set of concentric annular sections. Thus, the continuous surface of the conventional lens is divided into a set of surfaces of the same curvature, with stepwise discontinuities between them. A Fresnel lens can be regarded as an array of prisms arranged in a circular manner, wherein the prisms on the edges are steep, and the centre of the Fresnel lens is nearly flat. In particular, the microstructure provides the aforementioned structure of the Fresnel lens. The Fresnel lens is a refractive optical element.

In one embodiment, the optical element is adapted to provide a distorted reflection with a mirror effect, wherein the reflected image has a maximum magnification in the center of the optical element, and the magnification is continuously lowered towards the border of the optical element, such that the impression of a reflective lens is provided. This can be in particular obtained by a Fresnel lens provided in a substantially transparent material which is coated on one side thereof with a reflective coating.

Alternatively, the optical element may comprise an area providing a holographic element. In a holographic element, the microstructure diffracts the light, such that a three dimensional effect is provided.

Generally, the optical element can be a refractive optical element, diffractive optical element, or a refractive and diffractive optical element. Further, it may or may not be provided with a reflective coating.

Preferably, the optical element occupies a circular area, while the transition area occupies an annular area bordering on the optical element, in particular the Fresnel lens or holographic element. Alternatively, the area of the optical element has a shape that is different from a circle. Examples of suitable shapes include regular and irregular shapes. Suitable regular shapes include a rectangle, a triangle and an oval. Suitable irregular shapes include those defined by, for instance, text or icons or any other irregular shape. In the case of shapes other than a circle, the transition area preferably defines a perimeter having a thickness of between about 0.2 mm and about 3 mm bordering on the area of the optical element.

In particular, the microstructure height of the microstructure in the first area and outside the transition area is in between about 0.2 micrometers to about 200 micrometers, preferably about 10 micrometers.

The container may in particular comprise smoking articles, such as cigarettes, cigars or devices for vaporizing but not burning smoking material by heating.

The terms "front", "back", "upper", "lower", "side", "top", "bottom" and other terms used to describe relative positions of the components of containers according to the invention refer to the container in an upright position with the lid (where present) at the top end and the hinge (where present) on the back. The terms "left" and "right" are used with reference to side walls of the container when the container is viewed from the front in its upright position. When the container in the upright position is open, the consumer articles contained in the box may be removed from the upper end of the container. The term "longitudinal" refers to a direction from bottom to top or vice versa. The term "transverse" refers to a direction perpendicular to the longitudinal direction across the front wall, the back wall or one of the side walls.

The invention also relates to a blank for a container according to the invention, the blank being the multilayer sheet, which is at least partially printed. The blank comprises, in particular, a plurality of panels, which depend from each other via folding lines and are adapted to form the walls of a container, when the blank is folded to form a container. Furthermore, the blank comprises tabs, which depend from the panels, and allow a fixation of the panels with respect to each other, in particular by means of adhesive.

The print on the blank or on the container is in particular related to the container design, and may further comprise consumer information or marketing information. The container may in particular be formed by folding a blank according to the invention. However, in other embodiments, the multilayer sheet may as well be applied as a separate element to an already formed container. In particular, the multilayer sheet may be an insert, outsert or onsert for a container.

Generally, the container may be a hinge lid pack, comprising a hingeable lid on a box. Further, the container may be a slide and shell container comprising a slidable element in a shell. Further designs of containers as known in the art are also possible. The container may, in particular, be a cigarette package.

Preferably, the container comprises an inner frame mounted within the box, wherein the inner frame extends above the upper edges of at least the front wall of the box of the container. The inner frame is therefore visible to the consumer when the lid is opened. The front wall of the inner frame may be printed with indicia which may be the same as, or different to the indicia printed on the front wall of the box. Alternatively, or in addition, the front wall of the inner frame may be cut into a distinctive shape, for example, to reflect the branding of the consumer goods.

Preferably, the front wall of the inner frame is provided with a cut out portion at an upper edge of the inner frame. This provides a more convenient access to the consumer goods within the container, without significantly reducing the surface area of the front wall of the inner frame.

Alternatively, or in addition to an inner frame, the consumer goods within the container may be wrapped with an inner liner, which is visible above the upper edge of the front wall of the box and the front wall of the inner frame (if present) when the container is open.

A container according to the invention may be in the shape of a rectangular parallelepiped, with right-angled longitudinal and right-angled transverse edges. Alternatively, the container may comprise one or more rounded longitudinal edges, rounded transverse edges, bevelled longitudinal edges or bevelled transverse edges, or combinations thereof. For example, the container according to the invention may comprise, without limitation:
- One or two longitudinal rounded or bevelled edges on the front wall, and/or
- One or two longitudinal rounded or bevelled edges on the back wall.
- One or two transverse rounded or bevelled edges on the front wall, and/or
- One or two transverse rounded or bevelled edges on the back wall.
- One longitudinal rounded edge and one longitudinal bevelled edge on the front wall, and/or
- One transverse rounded edge and one transverse bevelled edge on the back wall.
- One or two transverse rounded or bevelled edges on the front wall and one or two longitudinal rounded or bevelled edges on the front wall.
- Two longitudinal rounded or bevelled edges on a first side wall or two transverse rounded or bevelled edges on the second side wall.

Where the container comprises one or more rounded edges and is made from a laminar blank, the blank preferably comprises three, four, five, six or seven scoring lines or creasing lines to form the rounded edge in the assembled container. The scoring lines or creasing lines may be either on the inside of the container or on the outside of the container. Preferably, the scoring lines or creasing lines are spaced apart from each other at a distance of between about 0.3 mm and about 4 mm.

Preferably, the spacing of the creasing lines or scoring lines is related to the thickness of the laminar blank. Preferably, the spacing between the creasing lines or scoring lines is between about 0.5 and about 4 times larger than the thickness of the laminar blank.

Where the container comprises one or more bevelled edges, the one or more bevelled edges preferably have a width of between about 1 mm and about 10 mm, more preferably between about 2 and about 6 mm. Alternatively, the container may comprise a double bevel formed by three parallel creasing lines or scoring lines that are spaced apart such that two distinct bevels form the edge of the container.

For a container having a rectangular transverse cross section, the container may have, for example, a polygonal cross section such as a triangular, quadrangular or hexagonal cross section, or a cross section which is oval, semi-oval, circular or semi-circular.

Where the container comprises a bevelled edge and is made from a laminar blank, the bevel may be formed by two parallel creasing lines or scoring lines in the laminar blank. The creasing lines or scoring lines may be arranged symmetrically to the edge between a first wall and a second wall. Alternatively, the creasing lines or scoring lines may be arranged asymmetrically to the edge between the first wall and the second wall, such that the bevel extends further into the first wall of the container than into the second wall of the container.

The container may be formed from any suitable materials including, but not limited to, cardboard, plastic, metal, or combinations thereof. Preferably, the cardboard has a weight of between about 100 grams per square metre and about 350 grams per square metre.

Containers according to the invention may be used as packages for a variety of consumer goods. In particularly preferred embodiments, containers according to the invention are used to package smoking articles. Preferred smoking articles include, but are not limited to, known lit-end cigarettes, cigars or cigarillos, heated smoking articles comprising a combustible fuel element or heat source and an aerosol-generating substrate (for example cigarettes of the type disclosed in US-A-4,714,082) and smoking articles for use with electrical smoking systems (for example cigarettes of the type disclosed in US-A-5,692,525).

Through an appropriate choice of the dimensions thereof, containers according to the invention may be designed to hold different total numbers of smoking articles, or different arrangements of smoking articles. For example, through an appropriate choice of the dimensions thereof, containers according to the invention may be designed to hold a total of between ten and thirty smoking articles.

Containers according to the invention may hold one, two, three four or five separate bundles of consumer goods. The separate bundles may be arranged substantially parallel to the front wall and to the back wall or substantially perpendicular to the front wall and to the back wall.

Within a bundle, the smoking articles may be arranged in different collations, depending on the total number of smoking articles, the dimensions of the smoking articles or the cross sectional shape of the container. For example, the smoking articles may be arranged in a bundle in a single row of five, six, seven, eight, nine or ten. Alternatively, the smoking articles may be arranged in two or more rows. The two or more rows may contain the same number of smoking articles. For example, the smoking articles may be arranged in: two rows of five, six, seven, eight, nine or ten; three rows of five, six, seven, eight, nine, or ten; or four rows of four, five, six or seven. Alternatively, the two or more rows may include at least two rows containing different numbers of smoking articles to each other. For example, the smoking articles may be arranged in: a row of five and a row of six (5-6); a row of six and a row of seven (6-7); a row of seven and a row of eight (7-8); a middle row of five and two outer rows of six (6-5-6); a middle row of five and two outer rows of seven (7-5-7); a middle row of six and two outer rows of five (5-6-5); a middle row of six and two outer rows of seven (7-6-7); a middle row of seven and two outer rows of six (6-7-6); a middle row of nine and two outer rows of eight (8-9-8); or a middle row of six with one outer row of five and one outer row of seven (5-6-7).

Containers according to the present invention may hold smoking articles of the same type or brand, or of different types or brands. In addition, both filterless smoking articles and smoking articles with various filter tips may be contained, as well as smoking articles of differing length (for example, between about 40 mm and about 180 mm), diameter (for example, between about 4 mm and about 9 mm). In addition, the smoking articles may differ in strength of taste, resistance to draw and total particulate matter delivery. Wherein the container comprises more than one bundle, each bundle within the same container may hold the same or different types of smoking articles as listed above.

Preferably, the dimensions of the container are adapted to the length of the smoking articles, and the collation of the smoking articles. Typically, the outer dimensions of the container are between about 0.5 mm to about 5 mm larger than the dimensions of the bundle of smoking articles housed inside the container.

Preferably, containers according to the invention have a height of between about 60 mm and about 150 mm, more preferably a height of between about 70 mm and about 125 mm, wherein the height is measured from the top wall to the bottom wall of the container.

Preferably, containers according to the invention have a width of between about 12 mm and about 150 mm, more preferably a width of between about 70 mm and about 125 mm, wherein the width is measured from the first side wall to the second side wall of the container.

Preferably, containers according to the invention have a depth of between about 6 mm and about 100 mm, more preferably a depth of between about 12 mm and about 25 mm wherein the depth is measured from the front wall to the back wall of the container (comprising the hinge between box and lid).

Preferably, the ratio of the height of the container to the depth of the container is in between about 0.3 to 1 and about 10 to 1, more preferably between about 2 to 1 and about 8 to 1, most preferably between about 3 to 1 and 5 to 1.

Preferably, the ratio of the width of the container to the depth of the container is in between about 1 to 1 and about 10 to 1, more preferably between about 2 to 1 and about 8 to 1, most preferably between about 2 to 1 and 3 to 1.

Preferably, the ratio of the height of the lid back wall to the height of the box back wall is between about 0 to 1 (hinge located at the top edge of the container) to about 1 to 1, more preferably, between about 1 to 5 and about 1 to 10, most preferably, between about 1 to 6 to about 1 to 8.

Preferably, the ratio of the height of the lid front wall to the height of the box front wall is between about 1 to 0 (lid covering the entire front wall) to about 1 to 10, more preferably, between about 1 to 1 and about 1 to 5, most preferably, between about 1 to 2 and about 1 to 3.

Where the inner housing of a container according to the present invention contains one or more bundles of smoking articles, the smoking articles are preferably wrapped in an inner liner of, for example, metal foil or metallised paper.

Where the container comprises smoking articles, the container may further comprise waste-compartments (for example for ash or butts) or other consumer goods, for example matches, lighters, extinguishing means, breath-fresheners or electronics. The other consumer goods may be attached to the outside of the container, contained within the container along with the smoking articles, in a separate compartment of the container or combinations thereof.

Once filled, containers according to the invention may be shrink wrapped or otherwise over wrapped with a transparent polymeric film of, for example, high or low density polyethylene, polypropylene, oriented polypropylene, polyvinylidene chloride, cellulose film, or combinations thereof in a conventional manner. Additionally or alternatively, the outer wrapper comprises the multilayer sheet according to the invention. Where containers according to the invention are over wrapped, the over wrapper may include a tear tape. The tear tape is preferably positioned around the container below the lower edge of the front wall of the lid, such that once the tear tape has been removed, the lid is free to be rotated about the hinge line.

The invention further relates to a method for production of a multilayer sheet with an optical element. Initially a substrate layer is provided. Then, a microstructure with a microstructure height is formed into the substrate layer in a first area of the multilayer sheet, and a transition microstructure is formed into the substrate layer in a transition area of the multilayer sheet, Before or after forming the microstructure, a print layer is applied onto the substrate layer by applying add-on material at least in a second area, wherein the transition area is between the first area and the second area. In the transition area, the transition microstructure is formed such that the microstructure height decreases from the first area towards the second area.

Thus, in the transition area, the optical effect provided by the microstructure is slowly faded out. When a print is provided on the multilayer sheet, which is not completely registered with the optical element, any misalignment is less visible, as the borders of the optical element are less visible, since they are slowly faded out.

Preferably, the microstructure and the transition microstructure are formed at the same time. In particular, the microstructure and the transition microstructure are formed with the same tool. Alternatively, they may be formed subsequently with different, registered tools.

Preferably, the print layer is substantially in registration with the optical element. However, as the optical effect slowly fades out in the transition area, the registration in between the print layer and the optical element requires a lower precision than in the prior art. In particular, the print layer is provided at least partially in the second area, and extends at least partially into the transition area. In this respect, "substantially in registration" means that the registration distance, that is, the distance of misalignment between registered elements on the print layer and on the substrate layer is preferably below 1 mm, more preferably, below 0.5 mm. Further, the print layer may fully extend in the transition area. Preferably, the print layer is provided on the side of the multilayer sheet opposite to the microstructure.

Further, a reflective layer may be applied on the microstructure. This enables a reflection of light subjected to the microstructure. The reflective layer may be applied by metallization, or by a thin film dielectric stacked structure.

In particular, the substrate layer may be substantially transparent.

Preferably, the substrate layer is a layer of polymer material only or a layer of polymer material with a ultra-violet curable coating.

Generally, the substrate layer may comprise a flexible or rigid layer, for example, paper, polyester, polycarbonate, and polypropylene, acrylic, polyethylene terephthalate or glass. Furthermore, the substrate layer may be colored. The substrate layer may also be transparent and colored.

The invention will now be further explained with reference to exemplary embodiments as shown in the figures.
Figure 1 shows a partial cross-section of a substrate layer of a multilayer sheet with an optical element according to the prior art.
Figure 2 shows a partial cross-section of a substrate layer of a multilayer sheet with an optical element for a container according to an embodiment of the invention.
Figure 3 shows a cross-section through various layers of a multilayer sheet according to an embodiment of the invention.
Figure 4 shows a frontal view of the multilayer sheet according to an embodiment of the invention with the optical element comprised therein.
Figure 5 shows a perspective view of a container according to an embodiment of the invention formed from a blank, being a multilayer sheet.

In Figure 2, a substrate layer 1 of a multilayer sheet for a container according to an embodiment of the invention is shown in cross-section. The substrate layer 1 is transparent. At the lower side of the substrate layer 1 an optical element 2 is formed by means of a microstructure 3. The microstructure 3 may be directly formed in the substrate layer 1, or may be formed in a curable coating of the substrate layer 1.

The microstructure 3 may be coated with a reflective material, such that light which is subjected to microstructure through the transparent substrate layer 1 is reflected by the microstructure 3, which has refractive or diffractive, or refractive and diffractive properties. Thus, an optical effect can be obtained. On the opposite side, the substrate layer 1 has a printable side 4, which is adapted to be printable. However, as usually an alignment of the print on the printable side 4, and the optical element 2 is necessary, while the print and the optical element are created at different production stations, it is beneficial if the alignment precision requirements regarding the registration of the print with the optical element 2 can be lowered. Generally, the multilayer sheet comprises a first area 5, in which the optical element 2 is provided and a second area 6, wherein no microstructure 3 is provided. To enable to slowly fade out the optical effect of the optical element 2, a transition area 7 is provided in between the first area 5 and the second area 6. In the transition area 7, the height of the microstructure decreases gradually towards the second area 6. Thus, in contrast to Figure 1, where the optical element 2 has a sharp border, the optical effect is slowly faded out in the transition area 7 in Figure 2. The optical element 2 provides an optical effect similar to the optical elements known in the prior art. In particular, the optical element 2 can be a Fresnel lens or a holographic element. However, in the transition area 7, this optical effect is slowly faded out. The first area 5 and the transition area 7 form together a microstructure area 8 comprising the microstructure 3.

When the multilayer sheet is printed, usually the print has to be registered with the optical element 2, to avoid that borders are visible in between the print and the optical element 2. The print is registered, such that it covers the second area 6 and extends at least partially into the transition area 7. If, the print is slightly misaligned with respect to the optical element 2, the border of the print is usually still within the transition area 7, wherein the optical effect less visible than in the optical element 2. Therefore, the border between the optical element 2 and the print is not as visible if the print would fully extend into the optical element 2, or if the print would not extend into the microstructure area 8 at all. The latter can occur in the prior art, if the misregistration in between print and optical element is above a very low tolerance zone.

However, as the print layer preferably extends in the transition area 7, the border in between the print and the optical element 2 is less visible.

In some embodiments, only the microstructure area 8 of the substrate layer 1, or the microstructure area 8 and its bordering regions in the second area 6, or the microstructure area 8 and the whole second area 6 are coated with a reflective coating, such as a metallization. Thus, in case the flat part of the metallization in the second area 6 would not be printed, a shiny reflective area would be provided at the border of the microstructure area 8, which could be seen by the consumer, and which reduces the aesthetic quality of the container. Thus, it is beneficial if the print extends into the transition area 7.

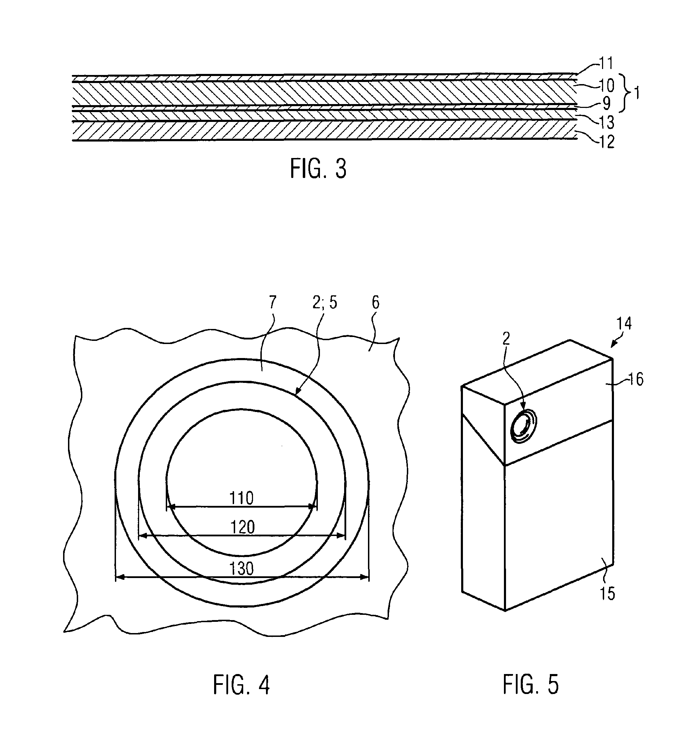

In Figure 3, a representation of the different layers forming the multilayer sheet is shown in cross-section. A substrate layer 1 is provided, which is formed by a polymer film 10, in particular a PET(polyethylene terephthalate) film, and a UV curable coating 9. The UV curable coating 9 contains the microstructure 3 which provides the optical effect. The polymer film 10 and the UV curable coating 9 are laminated together such that the two materials are connected together in the substrate layer 1. On the upper side of the substrate layer 1, a pre-treatment layer is provided at least in the region of the second area 6, The pre-treatment layer provides protection and a good printability. In particular, the pre-treatment layer can be a matt printing layer or a primer. Preferably, the pre-treatment layer is transparent. Thus, the pre-treatment layer may be applied on the whole side of the substrate layer 1. In other embodiments, the pre-treatment layer is not provided in the first area 5, but only extends throughout the second area 6 and at least partially into the transition area 7. A print layer 11 which comprises a print or varnish as an add-on material is applied on the pre-treatment layer. Alternatively, no pre-treatment layer may be provided and the print layer 11 may be applied without a pre-treatment layer. The print layer 11 extends preferably throughout the second area 6 and at least partially into the transition area 7.

At the lower side of the UV-curable coating 9, namely the side opposite to the polymer film 10, a metallization layer is provided, which enables that light, which is applied to the microstructure 3 through the transparent substrate layer 1, is reflected.

To provide stability for the multilayer sheet, a base board 12 is arranged at the lower side thereof, and fixed to the substrate layer 1 by means of adhesive 13. The base board 12 carries the substrate layer 1, and further protects the microstructure 3. In particular, the base board 12 is a cardboard with a weight of about 240 gram per square meter. The polymer film 10 of the substrate layer 1 has a thickness of about 23 micrometers.

In the following, the production of the multilayer sheet will be explained. First, a polymer film 10 is provided, which can be coated at one side thereof with a pre-treatment layer 11. Then, a UV-curable coating 9 applied to the other side of the polymer film 10. The UV-curable coating 9 is embossed in the first area 5 and transition area 7 of the multilayer sheet, to provide a microstructure 3, which is able to create an optical effect, thus forming an optical element 2 in the first area 5. The microstructure height of the microstructure 3 gradually lowered towards the second area 6 of the multilayer sheet is, such that the optical effect of the optical element 2 slowly fades out in the transition area 7. Then, the UV-curable coating 9 is provided with a metallization layer.

Then, the substrate layer 1 formed by the polymer film 10, the UV-curable coating 9 and the metallization is laminated by means of adhesive to a base board 12.

At a further production station, the multilayer sheet 1 is aligned with a printer and a print layer 11 is provided in a defined region with respect to the optical element 2. However, as the effect of the optical element 2 slowly fades in the transition area 7 and the print layer 11 extends partially into the transition area 7, the tolerance requirements for the alignment of the optical element 2 with the print layer 11 are lower than in the prior art.

In Figure 4, a frontal view of a multilayer sheet with an optical element 2 according to an embodiment of the invention is shown. The optical element 2 is provided in the first area 5 of the multilayer sheet. The optical element 2 is generally formed as a circular central part 110 with a diameter of about 8 mm, which appears to be visually deep sunken under the surface of the multilayer sheet. Bordering to the central part 110, in particular from a diameter of about 8 millimeters to a diameter of about 12 millimeters, a lens part 120 of the optical element 2 is provided, which slowly lowers the deep sunken impression of the optical element 2. Around the lens part 120, a transition part 130 is provided, which has a diameter of about 14.5 millimeters and which corresponds to the transition area 7. Thus, in the transition part 130, the optical effect slowly fades out. At least the central part 110 and the lens part 120 are spared of printing, when the multilayer sheet is printed at a later production stage.

The usual deviation of the print with respect to the optical element 2 is around 0.5 mm in the current production environment.

In Figure 5, a container 14 for smoking articles is shown. The container is a hinge-lid container which comprises a box 15 and a hingeable lid 16, which is hingedly connected by means of a hinge line at the rear of the container 14. The container is formed by folding a blank, which is a multilayer sheet according to the invention, and which is at least partially printed. As can be seen in Figure 5, the container comprises an optical element 2, which is provided at the front side of the lid 16. However, the optical element 2 may be provided in any other position on the container depending on the design requirements. In particular, it may be provided on the front wall, left side wall, right side wall or rear wall of the box 15 or lid 16. Further, it may be provided on the top wall or bottom wall of the container. Also, a portion of the optical element may be provided on the box and another portion on the lid, such that at least with a closed lid the two portions are adjacent to each other. Further, the optical element may be provided inside the lid.

## Claims

1. Container comprising a multilayer sheet, the multilayer sheet comprising
a substrate layer, and
a print layer comprising add-on material,
the container comprises
a first area wherein an optical element is provided, the optical element being formed by a microstructure with a predetermined microstructure height in the substrate layer,
a second area wherein add-on material is provided and which is free of the microstructure, and
a transition area between the first area and the second area, the transition area comprising a transition microstructure that is formed in the substrate layer, wherein in the transition area the microstructure height of the transition microstructure decreases from the first area towards the second area.

2. Container according to claim 1, wherein the microstructure is a micro-embossed structure in the substrate layer and the microstructure height is the embossing depth.

3. Container according to claim 1 or 2, wherein the print layer is provided in the printable second area on a first side of the multilayer sheet, while the microstructure is provided on the side of the substrate layer which is facing away from the print layer.

4. Container according to claim 3, wherein a base board is provided on a second side of the multilayer sheet, wherein the second side is opposite to the first side of the multilayer sheet.

5. Container according to any one of the previous claims, wherein the substrate layer is light transmissive.

6. Container according to any one of the previous claims, wherein the substrate layer comprises a ultra-violet curable coating, wherein the microstructure and the transition microstructure are formed within the ultra-violet curable coating.

7. Container according to claim 6, wherein the ultra-violet curable coating comprises a colorant.

8. Container according to any one of the previous claims, wherein the optical element is reflective.

9. Container according to claim 8, wherein a reflective coating is applied on the substrate layer.

10. Container according to any one of the previous claims, wherein the optical element comprises an area providing a Fresnel lens.

11. Container according to any one of claims 1 to 9, wherein the optical element comprises an area providing a holographic element.

12. Container according to any one of the previous claims, wherein the microstructure height of the microstructure in the first area and outside the transition area is in between about 0.2 micrometers to about 200 micrometers, preferably between about 5 micrometers and 50 micrometers.

13. Blank for a container according to any one of the previous claims, the blank being the multilayer sheet, which is least partially printed.

14. Method for production of a multilayer sheet with an optical element, comprising the steps:
- providing a substrate layer,
- forming a microstructure with a predetermined microstructure height into the substrate layer in a first area of the multilayer sheet,
- forming a transition microstructure into the substrate layer in a transition area of the multilayer sheet,
- applying a print layer onto the substrate layer by applying add-on material at least in a second area,
wherein the transition area is between the first area and the second area, and wherein in the transition area, the transition microstructure is formed such that the microstructure height decreases from the first area towards the second area.

15. Method according to claim 14, wherein the print layer is substantially in registration with the optical element.
